# EUROPÄISCHE PATENTSCHRIFT

(11) **EP 0 589 185 B1**
(45) Veröffentlichungstag und Bekanntmachung des Hinweises auf die Patenterteilung: **24.04.1996**
(21) Anmeldenummer: 93112391.3
(22) Anmeldetag: 03.08.1993
(51) Int. Cl.: B60T 15/04

(54) **Zweikreisige Bremsventileinrichtung**
Dual-circuit brake valve
Soupape de freinage à double circuit

(30) Priorität: 25.09.1992 DE 4232146
(43) Veröffentlichungstag der Anmeldung: 30.03.1994
(73) Patentinhaber: WABCO STANDARD GmbH, D-53008 Bonn (DE)
(72) Erfinder: Bartscher, Peter, D-30457 Hannover (DE); Pohl, Wolfgang, D-30826 Garbsen (DE); Martini, Gerhard, D-30989 Gehrden (DE); Sandmann, Jürgen, D-30974 Wennigsen (DE)
(74) Vertreter: Schrödter, Manfred, Dipl.-Ing.

(56) Entgegenhaltungen:
- EP-A- 0 196 814
- EP-A- 0 367 107
- WO-A-88/05739
- DE-A- 3 022 435

## Beschreibung

Die Erfindung betrifft eine zweikreisige Bremsventileinrichtung für eine druckluftbetätigbare Fahrzeug-Bremsanlage gemäß dem Oberbegriff des Patentanspruchs 1.

Eine derartige zweikreisige Bremsventileinrichtung ist aus der WO-A-88/05739 bekannt.

Bei der bekannten Bremsventileinrichtung ist zwischen dem ersten Kolben, der zur Steuerung des Druckes im ersten Bremskreis dient und dem zweiten Kolben, der zur Steuerung des Druckes im zweiten Bremskreis dient, eine Druckfeder am zweiten Kolben gefesselt angeordnet, über welche der zweite Kolben mit dem ersten Kolben in Wirkverbindung steht. Die Druckfeder stützt sich mit ihrem einen Ende am zweiten Kolben ab und beaufschlagt mit ihrem anderen Ende ein stößelartiges Bauteil, welches mit dem ersten Kolben in Wirkverbindung steht, in Richtung auf den ersten Kolben zu, wobei sie das stößelartige Bauteil in Anlage mit einem Anschlag des zweiten Kolbens hält. Bei einer Bewegung des ersten Kolbens in Richtung auf das erste kombinierte Einlaß- und Auslaßventil der Ventileinrichtung zu wird der zweite Kolben in Richtung auf das zweite kombinierte Einlaß- und Auslaßventil der Ventileinrichtung zu mitbewegt. Durch das Zusammenwirken der beiden Kolben über die Druckfeder wird bei einer Betätigung der Ventileirichtung die durch die am zweiten Kolben angeordneten Dichtringe verursachte Reibung und die Kraft der den Ventilkörper des zweiten kombinierten Einlaß- und Auslaßventils beaufschlagenden Feder weitestgehend ausgeglichen. Durch diese Maßnahme kann der zweite Kolben schneller auf den auf ihn einwirkenden Steuerdruck reagieren, wodurch eine annähernd gleichzeitige Betätigung der beiden kombinierten Einlaß- und Auslaßventile ermöglicht wird. Der Druckverlauf des von der Ventileinrichtung ausgesteuerten Druckes ist für den gesamten Druckaufbau im ersten Bremskreis und im zweien Bremskreis gleich. Die Druckdifferenz zwischen dem Druck im ersten Bremskreis und dem Druck im zweiten Bremskreis ist für den gesamten Druckaufbau konstant.

Um einen ungleichmäßigen Verschleiß an den Bremsbelägen der Räder eines Fahrzeugs zu vermeiden, wird eine Druckdifferenz von Δp annähern 0 angestrebt.

Eine Bremsventileinrichtung der eingangs erwähnten Art eignet sich insbesondere für Fahrzeuge mit einer zweikreisigen Bremsanlage, bei der beide Kreise mit gleich hohem Druck betrieben werden.

In Bremsanlagen von Fahrzeugen, bei denen der Bremsdruck an den Rädern einer Achse lastabhängig geregelt wird, läßt sich eine derartige Bremsventileinrichtung jedoch nicht ohne weiteres einsetzen, da mit der bekannten Bremsventileinrichtung in beide Bremskreise einer Bremsanlage gleich hohe Drücke eingesteuert werden, dagegen in die beiden Bremskreise einer Bremsanlage, bei der ein Bremskreis mit lastabhängig geregeltem Druck versorgt wird, der Druck in den beiden Kreisen jedoch unterschiedlich hoch sein kann.

Der Erfindung liegt die Aufgabe zugrunde, eine zweikreisige Bremsventileinrichtung der eingangs erwähnten Art in der Weise zu verbessern, daß bei einem Bremsvorgang für den gesamten Druckaufbau der Druckverlauf im zweiten Bremskreis gleich oder annähernd gleich dem Druckverlauf im ersten Bremskreis ist und daß die Druckdifferenz Δp zwischen dem von der Bremsventileinrichtung ausgesteuerten Druck im ersten Bremskreis und im zweiten Bremskreis unterhalb einer vorbestimmten Druckhöhe in den beiden Bremskreisen kleiner ist als die Druckdifferenz Δp zwischen dem Druck im ersten Bremskreis und dem Druck im zweiten Bremskreis nach Überschreiten dieser vorbestimmten Druckhöhe in den beiden Bremskreisen.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine zweikreisige Bremsventileinrichtung zu erhalten, mit der es möglich ist, für den ersten Bremskreis und für den zweiten Bremskreis einen Druck auszusteuern mit für den gesamten Druckaufbau gleichem bzw. annähernd gleichem Druckverlauf, wobei die Druckdifferenz Δp zwischen dem Druck des ersten Bremskreises und dem Druck des zweiten Bremskreises bei Einleitung eines Bremsvorganges 0 oder annähernd 0 ist und sich nach Überschreiten einer vorbestimmten Druckhöhe in den beiden Bremskreisen vergrößert.

Die Änderung der Druckdifferenz Δp wird dadurch ermöglicht, daß die mechanische Wirkverbindung zwischen dem ersten Kolben und dem zweiten Kolben aufgehoben wird, wenn der Druck im ersten Bremskreis einen vorbestimmten Wert überschreitet.

Anhand der Zeichnung wird nachfolgend ein Ausführungsbeispiel der Erfindung näher erläutert.

Es zeigen:
- Figur 1: eine als Zweikreisbremsventil ausgebildete Bremsventileinrichtung und
- Figur 2: ein Diagramm, in welchem der Druckverlauf in den beiden Bremskreisen darbgestellt ist.

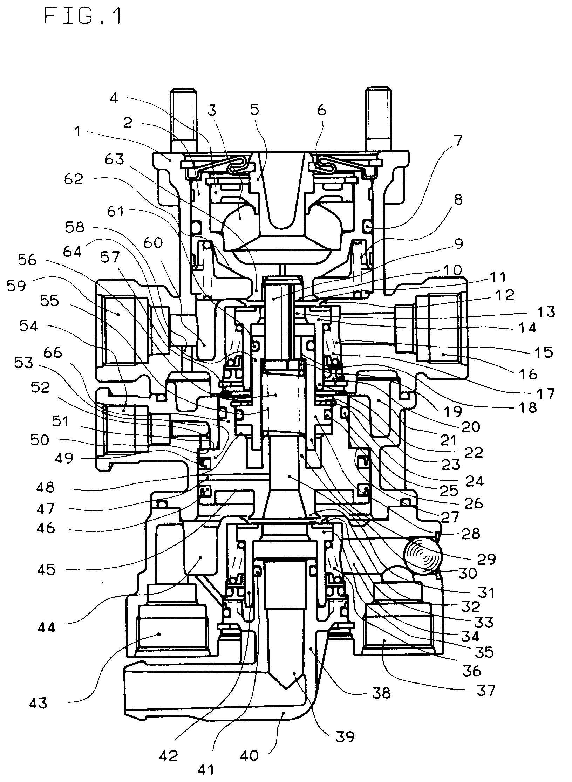

Das in Figur 1 gezeigte Zweikrei-Bremsventil weist einen in einem Gehäuse 1 mittels eines Doppeldichtringes (20) abgedichtet längsverschiebbar geführten ersten Ventilkörper (14) auf, der mit einem gehäusefesten ersten Einlaßsitz (12) ein erstes Einlaßventil (14, 12) bildet, über welches eine mit einem ersten Vorratsanschluß (16) verbundene erste Druckmitteleinlaßkammer (15) mit einer ersten Arbeitskammer (60) verbindbar ist, welche einen Druckmittelanschluß (59) für einen ersten Bremskreis (Hinterachsbremskreis) besitzt.

Der erste Ventilkörper (14) wird von einer sich an dem im Gehäuse (1) angeordneten Doppeldichtring (20) abstützenden Feder (17) gegen den ersten Einlaßsitz (12) und damit in Schließrichtung des ersten Einlaßventils (14, 12) vorgespannt.

Koaxial zum ersten Ventilkörper (14) ist im Gehäuse (1) abgedichtet längsverschiebbar ein als Abstufungskolben ausgebildeter erster Kolben (2) mittels eines Dichtringes (7) abgedichtet geführt, der mit seiner als Abstufungsfläche (62) ausgebildeten Unterseite die erste Arbeitskammer (60) begrenzt. Der Abstufungskolben (2) weist einen sich in die erste Arbeitskammer (60) hineinerstreckenden stößelartigen Fortsatz (63) auf, an dem ein erster Auslaßsitz (11) ausgebildet ist. Der erste Ventilkörper (14) bildet mit dem ersten Auslaßsitz (11) ein erstes Auslaßventil (11, 14). Der erste Ventilkörper (14) ist hohl ausgebildet. Das erste Einlaßventil (14, 12) und das erste Auslaßventil (11, 14) bilden ein erstes kombiniertes Einlaß- und Auslaßventil (14, 12, 11).

In einem der Abstufungsfläche (62) abgewandten hohlen oberen Bereich des Abstufungskolbens (2) ist relativ zu diesem längsverschiebbar ein aus einem Federteller (4) und einem Mittelstück (5) bestehendes Druckstück (4, 5) angeordnet. Zwischen dem Druckstück (4, 5) und dem Abstufungskolben (2) ist eine Abstufungsfeder (3) angeordnet. Die Abstufungsfeder (3) besteht im vorliegenden Fall aus einer Gummifeder, die erst in einer späten Betätigungsphase des Zweikreis-Bremsventils zur Wirkung kommt. Es liegt auf der Hand, daß die Abstufungsfeder auch auf jede andere geeignet Weise ausgebildet sein kann, beispielsweise als Schraubenfeder. Der Innenraum des Abstufungskolbens (2) ist mittels eines balgartigen, elastischen Teiles (6), welches einerseits an der Innenwand des Gehäuses (1) und andererseits am Teil (5) des Druckstückes (4, 5) befestigt ist, gegen das Eindringen von Schmutz und Feuchtigkeit geschützt.

In der ersten Arbeitskammer (60) ist eine sich einerseits an einem Gehäusevorsprung und andererseits an der Abstufungsfläche (62) des Abstufungskolbens (2) abstützende Feder (8) angeordnet, die den Abstufungskolben (2) in Öffnungsrichtung des ersten Auslaßventils (11, 14) des ersten kombinierten Einlaß- und Auslaßventils (14, 12, 11) vorspannt und bei unbetätigtem Zweikreis-Bremsventil ein sicheres Öffnen des ersten Auslaßventils (11, 14) bewirkt.

Koaxial zum ersten kombinierten Einlaß- und Auslaßventil (14, 12, 11) ist im Gehäuse (1) ein zweites kombiniertes Einlaß- und Auslaßventil (35, 33, 32) angeordnet. Das zweite kombinierte Einlaß- und Auslaßventil (35, 33, 32) weist einen zweiten Ventilkörper (35) auf, der mit einem im Gehäuse (1) ausgebildeten zweiten Einlaßsitz (33) ein zweites Einlaßventil (35, 33) bildet, über welches eine mit einem zweiten Vorratsanschluß (37) in Verbindung stehende zweite Druckmitteleinlaßkammer (34) mit einer zweiten Arbeitskammer (44) verbindbar ist. Der zweiten Arbeitskammer (44) ist ein Druckmittelanschluß (43) für einen zweiten Bremskreis (Vorderachsbremskreis) zugeordnet.

Der zweite Ventilkörper (35) ist hohl ausgebildet und von einer sich an einem im Gehäuse (1) angeordneten Doppeldichtring abstützenden Feder (36) gegen den zweiten Einlaßsitz (33), also in Schließrichtung des zweiten Einlaßventils (35, 33) vorgespannt. Der zweite Ventilkörper (35) weist einen rohrförmigen Fortsatz (42) auf.

In den rohrförmigen Fortsatz (42) des zweiten Ventilkörpers (35) erstreckt sich ein als Deckel des Gehäuses (1) ausgebildetes hohles Kniestück (38) mit einem Stutzen (40) hinein. Auf der äußeren Mantelfläche des Kniestückes (38) ist der zweite Ventilkörper (35) mittels eines Dichtringes (41) abgedichtet und längsverschieblich geführt.

Zwischen dem ersten kombinierten Einlaß- und Auslaßventil (14, 12, 11) und dem zweiten kombinierten Einlaß- und Auslaßventil (35, 33, 32) ist koaxial zu diesen ein als Relaiskolben (53) dienender zweiter Kolben in Richtung seiner Längsachse mittels drei Dichtringen (46, 49 und 25) abgedichtet verschiebbar angeordnet. Der hohl ausgebildete Relaiskolben (53) begrenzt mit seiner als Reaktionsfläche (45) dienenden Unterseite die zweite Arbeitskammer (44). Ausgehend von der Reaktionsfläche (45) weist der Relaiskolben (53) einen sich in Richtung auf den zweiten Ventilkörper (35) zu erstreckenden, nicht näher bezeichneten hohlen, stößelartigen Fortsatz auf, an dem ein zweiter Auslaßsitz (32) ausgebildet ist, der mit dem zweiten Ventilkörper (35) ein zweites Auslaßventil (35, 32) bildet. Das zweite Einlaßventil (35, 33) und das zweite Auslaßventil (35, 32) bilden das zweite kombinierte Einlaß- und Auslaßventil (35, 33, 32).

In seinem dem zweiten kombinierten Einlaß- und Auslaßventil (35, 33, 32) abgewandten Bereich ist der Relaiskolben (53) abgestuft ausgebildet. Mit seiner als erste Wirkfläche (57) ausgebildeten kleinen Stufenfläche begrenzt der Relaiskolben (53) eine erste Steuerkammer (21) und mit seiner als zweite Wirkfläche (50) ausgebildeten großen Stufenfläche begrenzt der Relaiskolben (53) eine zweite Steuerkammer (51). Die beiden Wirkflächen (57) und (50) sind der als Reaktionsfläche (45) dienenden dritten Wirkfläche des Relaiskolbens (53) entgegengerichtet.

Der Außendurchmesser der zweiten Wirkfläche (50) ist dem Außendurchmesser der als Reaktionsfläche (45) dienenden dritten Wirkfläche gleich. Wie für den Fachmann offensichtlich, kann der Außendurchmesser der zweiten Wirkfläche kleiner oder größer als der Außendurchmesser der dritten Wirkfläche sein, in welch letzterem Fall der Durchmesser der ersten Wirkfläche kleiner oder größer als der Durchmesser der dritten Wirkfläche oder dieser gleich sein kann.

Der Relaiskolben (53) ist an seinem Außenumfang mit dem Durchmesser der ersten Wirkfläche (57) und in der Nähe der zweiten Wirkfläche (50) an seinem Außenumfang mit dem Durchmesser der zweiten Wirkfläche mittels der erwähnten umlaufenden Dichtringe gegenüber der Innenwand des Gehäuses (1) abgedichtet. Zwischen dem in der Nähe der Reaktionsfläche (45) angeordneten Dichtring (46) und dem in der Nähe der zweiten Wirkfläche (50) angeordneten Dichtring (49) weist der Relaiskolben (53) eine Atmungsbohrung (47) auf, die mit einer zum zweiten Auslaßventil (35, 32) führenden Durchgangsöffnung (31) des Relaiskolbens (53) verbunden ist.

Die erste Arbeitskammer (60) ist mit der ersten Steuerkammer (21) über einen Gehäusekanal (58), der als Steueranschluß für die erste Steuerkammer (21) dient, verbunden.

Die zweite Steuerkammer (51) wird von der zweiten Wirkfläche (50) des Relaiskolbens (53) und einer Gehäusewand (27) begrenzt. Die zweite Steuerkammer (51) ist über einen Steueranschluß (54) mit dem von einem achslastabhängigen Bremskraftregler kommenden Druck beaufschlagbar.

Die Innenwand des als Hohlkolben augebildeten Relaiskolbens (53) ist abgestuft ausgebildet. In dem den größeren Innendurchmesser aufweisenden Bereich des als Hohlkolben ausgebildeten Relaiskolbens (53) ist ein ebenfalls als Hohlkolben ausgebildeter dritter Kolben (28, 29, 64) mittels eines Dichtringes (26) abgedichtet in Richtung der Längsachse des Relaiskolbens (53) in der Ausnehmung des Relaiskolbens (53) verschiebbar angeordnet. Der dritte Kolben (28, 29, 64) setzt sich praktisch aus einem rohrförmigen Körper (29, 64) und einem umlaufenden Vorsprung (28) zusammen, welcher den Dichtring (26) trägt. Die der Steuerkammer (21) zugewandte Seite des umlaufenden Vorsprungs (28) des dritten Kolbens (28, 29, 64) dient als Wirkfläche (23), welche vom Bremsdruck des ersten Bremskreises in Richtung vom Abstufungskolben (2) weg beaufschlagt wird. Der dritte Kolben (28, 29, 64) wird von einem Sicherungsring (24), welcher gleichzeitig die Funktion eines Anschlages für den dritten Kolben (28, 29, 64) hat, gegen herausgleiten aus der Ausnehmung des Relaiskolbens (53) gehindert. Dem als Anschlag dienenden Sicherungsring (24) gegenüber ist auf der der Wirkfläche (23) des dritten Kolbens (28, 29, 64) abgewandten Seite ein weiterer Anschlag (48) im Relaiskolben (53) vorgesehen. Der von einer Stufe in der Wand des Relaiskolbens (53) gebildete erste Anschlag (48) begrenzt den Hub des dritten Kolbens (28, 29, 64) in Richtung vom ersten kombinierten Einlaß- und Auslaßventil (14, 12, 11) weg und der vom Sicherungsring gebildete, dem ersten Anschlag (48) gegenüberliegende zweite Anschlag (24) begrenzt den Hub des dritten Kolbens (28, 29, 64) in Richtung auf das erste kombinierte Einlaß- und Auslaßventil (14, 12, 11) zu.

Das dem ersten kombinierten Einlaß- und Auslaßventil (14, 12 11) zugewandte rohrförmige Teil (64) des dritten Kolbens (28, 29, 64) erstreckt sich in einen rohrförmigen Fortsatz (22) des Ventilkörpers (14) des ersten kombinierten Einlaß- und Auslaßventils (14, 12, 11) hinein. Mittels eines Dichtringes (61) wird ein möglicher Spalt zwischen der äußeren Mantelfläche des rohrförmigen Teiles (64) des dritten Kolbens (28, 29, 64) und der Innenwand des rohrförmigen Fortsatzes (22) des Ventilkörpers (14) des ersten kombinierten Einlaß- und Auslaßventils (14, 12, 11) abgedichtet. Der dem Relaiskolben (53) zugewandte rohrförmige Endbereich (29) des dritten Kolbens (28, 29, 64) und somit der dritte Kolben (28, 29, 64) ist verschiebbar auf der äußeren Mantelfläche eines rohrförmigen Fortsatzes (30) des Relaiskolbens (53) angeordnet, wobei besagter rohrförmiger Fortsatz (30) sich in die Ausnehmung des Relaiskolbens (53) hineinerstreckt.

Der als Hohlkolben ausgebildete dritte Kolben (28, 29, 64) umgibt eine Druckfeder (55) oder umgekehrt gesagt, in dem Hohlraum (56) des dritten Kolbens (28, 29, 64) ist eine Druckfeder angeordnet, welche sich mit ihrem einen Ende auf der ringförmigen Stirnfläche des rohrförmigen Fortsatzes (30) des Relaiskolbens (53) abstützt und mit ihrem anderen Ende einen Stößel (9) beaufschlagt, welcher im Hohlraum des dritten Kolbens (28, 29, 64) in Richtung seiner Längsachse verschiebbar angeordnet ist. Der Stößel (9) weist auf seiner der Druckfeder (55) zugewandten Seite einen Vorsprung (19) auf, welcher an einem an der Innenwand des rohrförmigen Teiles (64) des dritten Kolbens (28, 29, 64) vorgesehenen, als Anschlag dienenden Vorsprung (18) anliegt. Mittels des dritten Kolbens (28, 29, 64), des Stößels (9) und des rohrförmigen Vorsprungs (30) des Relaiskolbens (53) wird die Druckfeder (55) gefesselt im bzw. am Relaiskolben (53), bzw. gefesselt bezüglich des Relaiskolbens (53) gehalten.

Der Stößel (9) erstreckt sich durch eine Ausnehmung (13) im Ventilkörper (14) des ersten kombinierten Einlaß- und Auslaßventils (14, 12, 11) hindurch in Richtung auf den Abstufungskolben (2) zu und liegt mit seinem der Druckfeder (55) abgewandten Ende am Boden einer Ausnehmung (10), die im Fortsatz (63) des Abstufungskolbens (2) vorgesehen ist, an. Der Stößel (9) ist in seinem Durchmesser so bemessen, daß beim Öffnen des Auslaßventils (14, 11) des ersten kombinierten Einlaß- und Auslaßventils (14, 12, 11) Druckluft aus der ersten Arbeitskammer (60) durch die Ausnehmung (13) des Ventilkörpers (14), den Hohlraum (56) des dritten Kolbens (28, 29, 64) sowie den daran anschließenden Durchlaß (31) im Relaiskolben (53) und das Auslaßventil (35, 32) des zweiten kombinierten Einlaß- und Auslaßventils (35, 33, 32) sowie den Auslaß (39) im Auslaßstutzen (40) zur Atmosphäre hin gelangen kann.

Die Funktion der vorstehend beschriebenen zweikreisigen Bremsventileinrichtung wird nachfolgend näher erläutert.

Der erste Vorratsanschluß (16) ist mit einem ersten Druckmittelvorrat verbunden und der Druckmittelanschluß (59) steht über einen nicht dargestellten achslastabhängigen Bremskraftregler mit zu Bremszylindern des ersten Bremskreises (Hinterachsbremskreis) führenden Druckmittelleitungen in Verbindung. Der zweite Vorratsanschluß (37) steht mit einem zweiten Druckmittelvorrat oder auch mit dem ersten Druckmittelvorrat in Verbindung. Der Druckmittelanschluß (43) ist mit den zu den Bremszylindern des zweiten Bremskreises (Vorderachsbremskreis) führenden Druckmittelleitungen verbunden.

Der Steueranschluß (54) steht mit einer den Druck des achslastabhängigen Bremskraftreglers führenden Druckmittelleitung in Verbindung.

Der zur Atmosphäre hin führende Druckmittelauslaß (39) steht mit dem zweiten Auslaßventil (35, 32) des zweiten kombinierten Einlaß- und Auslaßventil (35, 33, 32) der Bremsventileinrichtung in Verbindung. Desgleichen ist der Druckmittelauslaß (39) über die als Durchgangsbohrung ausgebildete Ausnehmung (31) im Relaiskolben (53) und den Hohlraum (56) des dritten Kolbens (28, 29, 64) sowie die zwischen der äußeren Mantelfläche des Stößels (9) und der Innenwand des als Hohlkörper ausgebildeten dritten Kolbens (28, 29, 64) vorgesehene Ausnehmung (65) mit dem ersten Auslaßventil (14, 11) des ersten kombinierten Einlaß- und Auslaßventil (14, 12, 11) verbunden.

In unbetätigtem Zustand der Bremsventileinrichtung sind das erste Einlaßventil (14, 12) und das zweite Einlaßventil (35, 33) geschlossen. Das erste Auslaßventil (14, 11) und das zweite Auslaßventil (35, 32) sind geöffnet. Dadurch sind die Bremskreise über das jeweils zugeordnete Auslaßventil zur Atmosphäre hin entlüftet.

Bei Betätigung eines über einen Stößel mit dem Druckstück (4,5) in Verbindung stehenden Bremspedals (Stellkraft) wird dessen abwärts gerichtete Bewegung über das Druckstück (4,5) und die Abstufungsfeder (3) auf den Abstufungskolben (2) übertragen. Nach Überwindung des Schließhubes des ersten Auslaßventils (14, 11) bewegt der Abstufungskolben (2) nach dem Schließen des ersten Auslaßventils (14, 11) den ersten Ventilkörper (14) abwärts und öffnet dadurch das erste Einlaßventil (14, 12). Dabei wird die Verbindung zwischen der ersten Arbeitskammer (60) und der Atmosphäre unterbrochen und die Verbindung zwischen der ersten Druckmitteleingangskammer (15) und der ersten Arbeitskammer (60) hergestellt.

Aus dem ersten Druckmittelvorrat strömt über den ersten Vorratsanschluß (16) und das erste Einlaßventil (14, 12) Druckluft in die erste Arbeitskammer (60) und von dieser weiter über den Druckmittelanschluß in den Hinterachsbremskreis (erster Bremsdruck).

Gleichzeitig mit den vorstehend beschriebenen Vorgängen wird vom Abstufungskolben (2) über den Stößel (9) und die mit diesem in Wirkverbindung stehende Druckfeder (55) der Relaiskolben (53) nach unten, in Richtung auf das zweite kombinierte Einlaß- und Auslaßventil (35, 33, 32) zu bewegt. Durch diese Maßnahme werden das Auslaßventil (14, 11) des ersten kombinierten Einlaß- und Auslaßventils (14, 12, 11) und das Auslaßventil (35, 32) des zweiten kombinierten Einlaß- und Auslaßventils (35, 33, 32) annähernd gleichzeitig geschlossen und das Einlaßventil (14, 12) des ersten kombinierten Einlaß- und Auslaßventils (14, 12, 11) sowie das Einlaßventil (35, 33) des zweiten kombinierten Einlaß- und Auslaßventils (35, 33, 32) annähernd gleichzeitig in die Offenstellung gebracht. Aus dem zweiten Druckmittelvorrat strömt über den zweiten Vorratsanschluß (37) und das zweite Einlaßventil (35, 33) des zweiten kombinierten Einlaß- und Auslaßventils (35, 33, 32) Druckluft in die zweite Arbeitskammer (44) und von dieser weiter über den Druckmittelanschluß (43) in den Vorderachsbremskreis (vom ersten Bremsdruck abhängiger zweiter Bremsdruck).

Der sich in der ersten Arbeitskammer (60) aufbauende erste Bremsdruck gelangt gleichzeitig über den Kanal (58) in die von der ersten Wirkfläche (57) des Relaiskolbens (53) begrenzte Steuerkammer (21) und beaufschlagt die erste Wirkfläche (57) des Relaiskolbens (53) und die Wirkfläche (23) des dritten Kolbens (28, 29, 64). Von dem nicht dargestellten achslastabhängigen Bremskraftregler gelangt Druckmittel über den Steueranschluß (54) und einen Kanal (52) auf die zweite Wirkfläche (50) des Relaiskolbens (53).

Der erste Bremsdruck und der vom achslastabhängigen Bremskraftregler kommende Druck dienen für den Relaiskolben (53) als Steuerdruck.

Der auf die erste Wirkfläche (57) und auf die Wirkfläche (23) des dritten Kolbens (28, 29, 64) einwirkende Druck aus der Steuerkammer (21) bewirkt, daß der Relaiskolben (53) und der dritte Kolben (28, 29, 64) sich weiter abwärts, in Öffnungsrichtung des zweiten kombinierten Einlaß- und Auslaßventils (35, 33, 32) bewegen. Hat der Druck aus der Steuerkammer (21) eine vorbestimmte Druckhöhe erreicht, löst sich der dritte Kolben (28, 29, 64) vom zweiten Anschlag (24) und bewegt sich in Öffnungsrichtung des zweiten kombinierten Einlaß- und Auslaßventils (35, 33, 32). Das Teil (28) des dritten Kolbens (28, 29, 64) kommt am ersten Anschlag (48) des Relaiskolbens (53) zur Anlage, wobei die Druckfeder (55) gespannt wird und der Stößel (9) vom Vorsprung (18) des dritten Kolbens (28, 29, 64) mitgenommen wird. Bei diesem Vorgang löst sich der Stößel (9) vom Abstufungskolben (2). Die Wirkverbindung zwischen dem Abstufungskolben (2) und dem Relaiskolben (53) ist jetzt unterbrochen.

Der Druck (P 21) in der ersten Arbeitskammer (60) und somit auch der Druck im ersten Bremskreis erhöht sich gegenüber dem über das Einlaßventil (35, 33) des zweiten kombinierten Einlaß- und Auslaßventils (35, 33, 32) in den zweiten Bremskreis eingesteuerten Druck.

Diese Druckerhöhung kann im zweiten Bremskreis nicht erfolgen, da der Abstufungskolben (2) und der Relaiskolben (53) nicht mehr in mechanischer Wirkverbindung stehen und somit der als Steuerdruck für den Relaiskolben (53) dienende Druck aus der Steuerkammer (21) den Relaiskolben (53) aufgrund der durch die am Relaiskolben (53) angeordneten Dichtringe erzeugten Reibkraft und der Federkraft des zweiten Einlaßventils (35, 33) den Relaiskolben (53) auf die Druckerhöhung in der ersten Arbeitskammer (60) und somit auch in der Steuerkammer (21) nicht so schnell reagieren lassen kann.

Zwischen dem Druck (P 21) in dem ersten Bremskreis und dem Druck (P 22) im zweiten Bremskreis entsteht eine Druckdifferenz Δp bzw. erhöht sich die Druckdifferenz Δp.

Bei Einleitung eines Bremsvorganges, wie bereits erwähnt, sind die Drücke in den beiden Bremskreisen annähernd gleich hoch, bei gleichem Druckverlauf (Δp) annähernd Null. Beim weiteren Bremsdruckaufbau stellt sich die größere Druckdifferenz Δp zwischen den Drücken in den beiden Bremskreisen ein, wobei jedoch der Druckverlauf in den beiden Bremskreisen auch bei einem größer gewordenen Δp gleich ist.

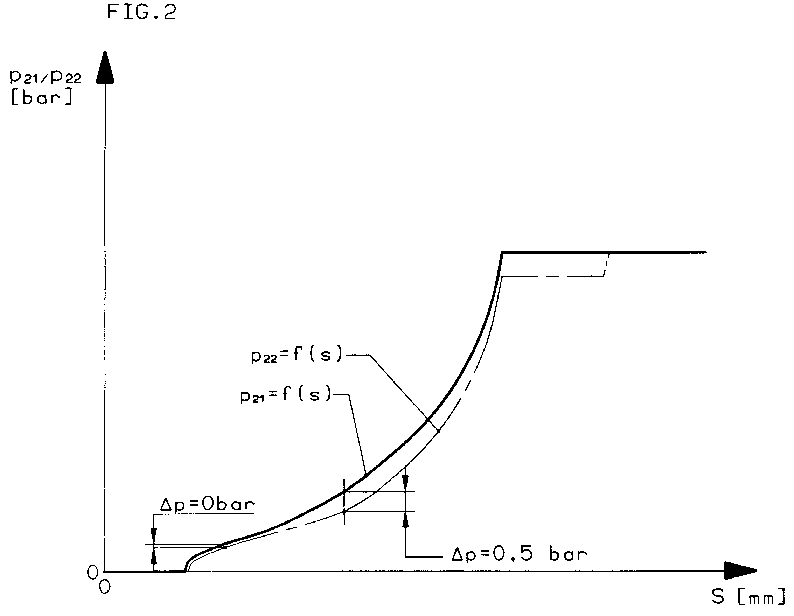

Der Druckverlauf in den beiden Bremskreisen ist in der Figur 2 dargestellt.

Mit (P 21/P 22) ist die Druckhöhe und mit (s) ist der Weg angegeben.

Die Kurve (P 21) zeigt den Druckverlauf des Druckes des ersten Bremskreises und (P 22) zeigt den Druckverlauf des Druckes des zweiten Bremskreises.

p stellt die Druckdifferenz zwischen dem Druck des ersten Bremskreises und dem Druck des zweiten Bremskreises dar.

Als Beispiel ist in Figur 2 angegeben, daß bis zu einer Druckhöhe von 1 bar die Druckdifferenz zwischen dem Druck im ersten Bremskreis und dem Druck im zweiten Bremskreis annähernd Null ist. Ab der Druckhöhe 1 bar in den beiden Bremskreisen erfolgt eine Druckerhöhung im ersten Bremskreis um z. B. 0,5 bar gegenüber der Höhe des Druckes im zweiten Bremskreis. Mit der Druckdifferenz von 0,5 bar baut sich der Druck im ersten Bremskreis und im zweiten Bremskreis weiter auf, wobei der Druckverlauf des Druckes in den beiden Bremskreisen auch weiterhin gleich ist. Im ersten Bremskreis herrscht in der Abschlußstellung ein Druck von z. B 5 bar und im zweiten Bremskreis ein Druck von 4,5 bar.

Wenn die Kraft des auf den Abstufungskolben (2) einwirkenden ersten Bremsdruckes in der ersten Arbeitskammer (60) und die von der Abstufungsfeder (3) auf den Abstufungskolben (2) entgegengerichtete Kraft sich im Gleichgewicht befinden, sind das erste Auslaßventil (14, 11) und das erste Einlaßventil (14, 12) geschlossen. Eine Abschlußstellung ist erreicht.

Wenn sich zwischen den über die erste Wirkfläche (Steuerfläche 57) des Relaiskolbens (53) zusammen mit der Wirkfläche (23) des dritten Kolbens (28, 29, 64) sowie die zweite Wirkfläche (50) des Relaiskolbens (53) und den über die Reaktionsfläche (45) des Relaiskolbens (53) auf den Relaiskolben (53) einwirkenden Druckkräften ein Gleichgewicht gebildet hat, sind das zweite Auslaßventil (35, 32) und das zweite Einlaßventil (35, 33) geschlossen. Eine Abschlußstellung ist erreicht.

Wie bereits erwähnt, wirken sich die durch die zahlreichen Abdichtungen des Relaiskolbens (53) verursachten Reibkräfte und die den Ventilkörper (35) in Schließstellung des zweiten Einlaßventils belastende Feder (36) des zweiten Ventils (35, 33, 32) derart aus, daß der Relaiskolben (53) sich erst bei einem erhöhten ersten Bremsdruck in Richtung auf den zweiten Ventilkörper (35) zu in Bewegung setzt. Diese Ansprechverzögerung wird durch die in dem als Kohlkolben ausgebildeten dritten Kolben angeordnete Druckfeder (55) und den mit diesen in Verbindung stehenden Stößel (9) dadurch weitestgehend aufgehoben, daß bei der Bewegung des Abstufungskolbens (2) über den Stößel (9) und die Druckfeder (55) in den Relaiskolben (53) eine die von dem ersten Bremsdruck erzeugte Kraft unterstützende Kraft eingeleitet wird.

Wenn das erste Einlaßventil (14, 12) geschlossen und das erste Auslaßventil (14, 11) des ersten kombinierten Einlaß- und Auslaßventils (14, 12, 11) in die Offenstellung gelangt, so daß der Druck in der ersten Arbeitskammer (60) und somit auch im ersten Bremskreis abgebaut wird, wird auch der erste Bremsdruck in der Steuerkammer (21) abgebaut, so daß sich der Relaiskolben (53) wieder in seine Ausgangsstellung zurückbewegt, wodurch auch das zweite Einlaßventil (35, 33) geschlossen und das zweite Auslaßventil (35, 32) des zweiten kombinierten Einlaß- und Auslaßventils (35, 33, 32) in die Offenstellung gelangt. Jetzt wird auch der Druck in der zweiten Arbeitskammer (44) und somit der Druck im zweiten Bremskreis zur Atmosphäre hin abgebaut. Bei diesem Vorgang bewegt sich der dritte Kolben (28, 29, 64), bedingt durch die Kraft der Druckfeder (55), nach oben, in Richtung auf das erste kombinierte Einlaß- und Auslaßventil (14, 12, 11) zu, und zwar so weit, bis der dritte Kolben (28, 29, 64) am zweiten Anschlag (24) des Relaiskolbens (53) und der Stößel (9) am ersten Kolben (Abstufungskolben) (2) zur Anlage kommen.

Der Abstand zwischen dem ersten Anschlag (48) und dem zweiten Anschlag (24) des Relaiskolbens (53) ist so bemessen, daß der Stößel (9) und der Abstufungskolben (2) so lange außer Eingriff bleiben, so lange der dritte Kolben (28, 29, 64) vom ersten Bremsdruck in der Steuerkammer (21) am ersten Anschlag (48) des Relaiskolbens (53) gehalten wird.

Durch das Unterbrechen der mechanischen Wirkverbindung zwischen dem Abstufungskolben (2) und dem Relaiskolben (53) ist es möglich, für den ersten Bremskreis und den zweiten Bremskreis ab einer vorbestimmbaren Druckhöhe mit annähernd gleichem Druckverlauf in beiden Bremskreisen unterschiedliche Bremsdrücke auszusteuern.

Es ist natürlich auch möglich, bei Verzicht auf die Beeinflussung des Druckes im zweiten Bremskreis durch den von einem achslastabhängigen Bremskraftregler ausgesteuerten Druck den Druckmittelanschluß (54) für einen von einem achslastabhängigen Bremskraftregler ausgesteuerten Druck zu verschließen oder diesen ganz wegzulassen.

Desgleichen ist es möglich, die Ventilrichtung als ein durchsteuerndes Ventil auszubilden, wobei die Steuerkammer (21) und die zweite Druckmitteleingangskammer (34) über einen Kanal miteinander verbunden werden. In einen solchen Fall kann auf den zweiten Vorratsanschluß (37) verzichtet werden.

Die beschriebene Ventileinrichtung setzt sich praktisch aus einem Steuerventil und einem Relaisventil zusammen, wobei das Steuerventil aus der Abstufungsfeder (3), dem Abstufungskolben (2), dem ersten kombinierten Einlaß- und Auslaßventil (14, 12, 11) und dem ersten Vorratsanschluß (16), der ersten Druckmitteleingangskammer (15), der ersten Arbeitskammer (60) und dem mit dem ersten Bremskreis verbundenen Druckmittelanschluß (59) besteht und das Relaisventil sich im wesentlichen aus dem Relaiskolben (53), dem zweiten kombinierten Einlaß- und Auslaßventil (35, 33, 32), der zweiten Druckmitteleingangskammer (34), der zweiten Arbeitskammer (44) und dem mit dem zweiten Bremskreis verbundenen zweiten Druckmittelanschluß (43) zusammensetzt. Zwischen dem als Abstufungskolben dienenden ersten Kolben (2) und dem als Relaiskolben dienenden zweiten Kolben (53) ist die Druckfeder (55) angeordnet.

Die Arbeitskammer (60) des Steuerventils ist, wie bereits erwähnt, über einen Kanal (58) mit der Steuerkammer (21) des Relaisventils verbunden. Der den Abstufungskolben (2) des Steuerventils mit dem Relaiskolben (53) des Relaisventils über die Druckfeder (55) in Wirkverbindung bringende Stößel (9) kann sowohl aus einem vollen Material als auch als Hohlkörper ausgebildet sein.

Als Anschlag für den Stößel kann im dritten Kolben (28) ein sich nach innen, in Richtung auf den Stößel zu erstreckender umlaufender Vorsprung (28, 29, 64) vorgesehen sein, es können aber auch ein oder mehrere einzelne Vorsprünge im dritten Kolben (28, 29, 64) vorgesehen werden, an denen der Vorsprung (19) des Stößels (9) zur Anlage kommt.

Die Druckfeder (55) kann auch in der Weise am zweiten Kolben (53) angeordnet sein, daß sie sich mit ihrem einen Ende am zweiten Kolben (53) abstützt und mit ihrem anderen Ende ein als Stößel oder als Federteller ausgebildetes Bauteil (9, 65) beaufschlagt und so dieses Bauteil (9, 65) in Anlage mit einem Anschlag des zweiten Kolbens (53) hält. Wird anstelle des Stößels ein Federteller verwendet, so kann am ersten Kolben (2) ein Fortsatz vorgesehen werden, gegen den der Federteller von der Druckfeder (55) gedrückt wird.

Der dritte Kolben (28, 29, 64) muß nicht als Hohlkolben ausgebildet sein und muß auch nicht die Druckfeder (55) umgeben. Er kann an irgendeiner Stelle in der Nähe der Druckfeder (55) im Gehäuse der Ventileinrichtung angeordnet sein und Mittel, wie z. B. einen Vorsprung, aufweisen, die an dem Bauteil-Federteller - derart angreifen, daß bei einer Bewegung des dritten Kolbens (28, 29, 64) in Richtung auf den zweiten Kolben (53) zu das Bauteil im Sinne einer Verkürzung des Abstandes zweischen den beiden Enden der Druckfeder (55) und somit im Sinne einer Aufhebung der Wirkverbindung zwischen dem von der Druckfeder (55) beaufschlagten Bauteil und dem ersten Kolben (2) mitgenommen wird, so wie es auch gemäß dem Ausführungsbeispiel mit dem Stößel (9, 64) gemacht wird.

Für die Erfindung ist es von besonderer Bedeutung, daß die Druckfeder zwischen dem ersten Kolben (2) und dem zweiten Kolben (53) am zweiten Kolben (53) gefesselt angeordnet ist und daß der dritte Kolben (28, 29, 64) Mittel (18) aufweist, die an dem Bauteil (9) angreifen, derart, daß bei einer Bewegung des dritten Kolbens (28, 29, 64) in Richtung auf den zweiten Kolben (53) zu das Bauteil (9) im Sinne einer Verkürzung des Abstandes zwischen den beiden Enden der Druckfeder (55) und somit im Sinne einer Aufhebung der Wirkverbindung zwischen dem von der Druckfeder (55) beaufschlagten Bauteil (9) und dem ersten Kolben (2) mitgenommen wird.

## Patentansprüche

1. Zweikreisige Bremsventileinrichtung für eine druckluftbetätigbare Motorfahrzeug-Bremsanlage mit folgenden Merkmalen:
a) zur Steuerung des Druckes im ersten Bremskreis ist ein von einer Stellkraft betätigter erster Kolben (2) vorgesehen, welcher zur Betätigung eines ersten kombinierten Einlaß- und Auslaßventils (14, 12, 11) dient, wobei über das erste kombinierte Einlaß- und Auslaßventil (14, 12, 11) aus einem ersten Vorrat für den ersten Bremskreis ein von der Größe der Stellkraft abhängiger erster Bremsdruck ausgesteuert wird;
b) zur Steuerung des Druckes im zweiten Bremskreis ist ein zweiter Kolben (53) vorgesehen, dem der erste Bremsdruck als Steuerdruck zugeführt wird, und welcher zur Betätigung eines zweiten kombinierten Einlaß- und Auslaßventils (35, 33, 32) dient, wobei über das zweite kombinierte Einlaß- und Auslaßventil (35, 33, 32) aus einem zweiten Vorrat oder aus dem ersten Vorrat für den zweiten Bremskreis ein vom ersten Bremsdruck abhängiger zweiter Bremsdruck ausgesteuert wird;
c) zwischen dem ersten Kolben (2) und dem zweiten Kolben (53) ist eine Druckfeder (55) angeordnet, über welche der erste Kolben (2) und der zweite Kolben (53) miteinander in Wirkverbindung stehen;
d) die Druckfeder (55) ist gefesselt am zweiten Kolben (53) angeordnet, derart, daß sie sich mit ihrem einen Ende am zweiten Kolben (53) abstützt und mit ihrem anderen Ende ein Bauteil (9), welches mit dem ersten Kolben (2) in Wirkverbindung steht, beaufschlagt und so dieses Bauteil (9) in Anlage mit einem Anschlag (24) des zweiten Kolbens (53) hält;
gekennzeichnet durch die folgenden Merkmale:
e) es ist ein dritter Kolben (28, 29, 64) vorgesehen, welcher Mittel (18) zur Bewegung des Bauteils (9) gegen die Kraft der Druckfeder (55) aufweist und somit im Sinne einer Aufhebung der Wirkverbindung zwischen dem von der Druckfeder (55) beaufschlagten Bauteil (9) und dem ersten Kolben (2) wirkt;
f) der dritte Kolben (28, 29, 64) weist eine Wirkfläche (23) auf, welche vom ersten Bremsdruck beaufschlagbar ist;
g) die Wirkfläche (23) ist auf der dem zweiten Kolben (53) abgewandten Seite des dritten Kolbens (28, 29, 64) vorgesehen.

2. Zweikreisige Bremsventileinrichtung nach Anspruch 1, dadurch gekennzeichnet, daß das Bauteil (9) als Stößel (9, 65) ausgebildet ist.

3. Zweikreisige Bremsventileinrichtung nach Anspruch 1, dadurch gekennzeichnet, daß das Bauteil (9) als Federteller ausgebildet ist.

4. Zweikreisige Bremsventileinrichtung nach Anspruch 1, dadurch gekennzeichnet, daß der erste Kolben (2) einen sich auf den zweiten Kolben (53) zu erstreckenden Fortsatz aufweist, der mit seinem freien Ende am Bauteil (9) anliegt.

5. Zweikreisige Bremsventileinrichtung nach Anspruch 1, gekennzeichnet durch die folgenden Merkmale:
a) der dritte Kolben (28, 29, 64) ist als Hohlkolben ausgebildet;
b) die Druckfeder (55) ist im dritten Kolben (28, 29, 64) angeordnet;
c) der dritte Kolben (28, 29, 64) ist im zweiten Kolben (53) zwischen zwei in diesem angeordneten Anschlägen (48 und 24) in Richtung der Längsachse des zweiten Kolbens (53) verschiebbar angeordnet;
d) der dritte Kolben (28, 29, 64) weist Mittel (18) zur Mitnahme des Bauteils (9) entgegen der Kraft der Druckfeder (55) auf;
e) der Abstand zwischen dem ersten Anschlag (48) und dem zweiten Anschlag (24) des zweiten Kolbens (53) ist so gemessen, daß der dritte Kolben (28, 29, 64) in Richtung der Längsachse des zweiten Kolbens (53) einen Hub ausführen kann, welcher so bemessen ist, daß die Wirkverbindung zwischen dem ersten Kolben (2) und dem zweiten Kolben (53) aufgehoben ist, wenn der dritte Kolben (28, 29, 64) am ersten Anschlag (48) anliegt und die Wirkverbindung zwischen dem ersten Kolben (2) und dem zweiten Kolben (53) wieder hergestellt ist, wenn der dritte Kolben (28, 29, 64) am zweiten Anschlag (24) anliegt.

6. Zweikreisige Bremsventileinrichtung nach wenigstens einem der vorhergehenden Ansprüche, gekennzeichnet durch die folgenden Merkmale:
a) der dritte Kolben (28, 29, 64) besteht aus einem rohrförmigen Körper (29, 64) an dessen äußerer Mantelfläche ein umlaufender Vorsprung (28) vorgesehen ist;
b) der dem ersten kombinierten Einlaß- und Auslaßventil (14, 12, 11) zugewandte Bereich (64) des rohrförmigen Körpers (29, 64) erstreckt sich in einen sich auf den zweiten Kolben (53) zu erstreckenden rohrförmigen Fortsatz (22) des Ventilkörpers (14) des ersten kombinierten Einlaß- und Auslaßventils (14, 12, 11) hinein und ist mittels eines Dichtrings (61) gegen die Innenwand des rohrförmigen Fortsatzes (22) abgedichtet;
c) der dem zweiten Kolben (53) zugewandte Bereich (29) des rohrförmigen Körpers (29, 64) erstreckt sich in den zweiten Kolben (53) hinein und wird auf der äußeren Mantelfläche eines rohrförmigen Vorsprungs (30) des zweiten Kolbens (53) geführt;
d) zwischen der äußeren Mantelfläche des umlaufenden Vorsprungs (28) des dritten Kolbens (28, 29, 64) und einer eine im zweiten Kolben (53) vorgesehenen Durchgangsöffnung begrenzenden Wandung ist ein Dichtelement (26) angeordnet.

7. Zweikreisige Bremsventileinrichtung nach Anspruch 1, dadurch gekennzeichnet, daß der zweite Kolben (53) mit einer vom ersten Bremsdruck beaufschlagten Steuerfläche (57) eine Steuerkammer (21) und mit einer dieser Steuerfläche (57) entgegengerichteten Reaktionsfläche (45) eine Arbeitskammer (44) begrenzt.

8. Zweikreisige Bremsventileinrichtung nach wenigstens einem der vorhergehenden Ansprüche, dadurch gekennzeichnet, daß der zweite Kolben (53) als Stufenkolben ausgebildet ist, wobei die der Steuerkammer (21) zugewandte ringförmige Stirnfläche des zweiten Kolbens als eine erste Wirkfläche (57) und die Stufe des zweiten Kolbens (53) als eine zweite Wirkfläche (50) ausgebildet ist.

9. Zweikreisige Bremsventileinrichtung nach wenigstens einem der vorhergehenden Ansprüche, gekennzeichnet durch die folgenden Merkmale:
a) der zweite Kolben (53) weist eine abgestufte Durchgangsöffnung (31) auf, wobei die Stufe als ein erster Anschlag (48) und ein der Stufe gegenüber angeordneter Sicherungsring als ein zweiter Anschlag (24) ausgebildet sind;
b) der dritte Kolben (28, 29, 64) ist mit seinem umlaufenden Vorsprung (28) derart im zweiten Kolben (53) verschiebbar angeordnet, daß sein Hub durch den ersten Anschlag (48) und dem zweiten Anschlag (24) begrenzt wird.

10. Zweikreisige Bremsventileinrichtung nach wenigstens einem der vorhergehenden Ansprüche, dadurch gekennzeichnet, daß der zweite Kolben (53) als Relaiskolben ausgebildet ist, dessen der Steuerkammer (21) zugewandte Seite vom ersten Bremsdruck beaufschlagbar ist und dessen der Steuerkammer (21) abgewandte Seite als Reaktionsfläche (45) für den zweiten Bremsdruck ausgebildet ist.

11. Zweikreisige Bremsventileinrichtung nach wenigstens einem der vorhergehenden Ansprüche, dadurch gekennzeichnet, daß die der Steuerkammer (21) zugewandte Seite des umlaufenden Vorsprungs (28) des dritten Kolbens (28, 29, 64) als Wirkfläche (23) für den dritten Kolben (28, 29, 64) ausgebildet ist, welche vom Druck in der ersten Steuerkammer beaufschlagt wird.

12. Zweikreisige Bremsventileinrichtung nach wenigstens einem der vorhergehenden Ansprüche, dadurch gekennzeichnet, daß die Steuerkammer (21) und die Druckmitteleingangskammer (34) über einen Kanal ineinander verbunden sind.

13. Zweikreisige Bremsventileinrichtung nach wenigstens einem der vorhergehenden Ansprüche, dadurch gekennzeichnet, daß ein mit einem Bremskraftregler verbundener Druckmittelanschluß (54) vorgesehen ist, über welchen eine zweite Wirkfläche (50) des zweiten Kolbens (53) mit dem vom Bremskraftregler kommenden Druck beaufschlagbar ist.

## Claims

1. Dual-circuit brake valve device for a motor vehicle braking system that can be operated by compressed air, having the following features:
a) a first piston (2) that is operated by an actuating force is provided for controlling the pressure in the first brake circuit, which piston serves to operate a first combined inlet and outlet valve (14, 12, 11), a first brake pressure, dependent on the magnitude of the actuating force, being delivered for the first brake circuit from a first supply via the first combined inlet and outlet valve (14, 12, 11);
b) a second piston (53) is provided for controlling the pressure in the second brake circuit, to which piston the first brake pressure is supplied as control pressure and which piston serves to operate a second combined inlet and outlet valve (35, 33, 32), a second brake pressure, dependent on the first brake pressure, being delivered for the second brake circuit via the second combined inlet and outlet valve (35, 33, 32) from a second supply or from the first supply;
c) a compression spring (55) is arranged between the first piston (2) and the second piston (53), by way of which spring the first piston (2) and the second piston (53) are in operative connection with one another;
d) the compression spring (55) is arranged attached to the second piston (53) in such a manner that it bears with one end against the second piston (53) and with its other end acts upon a component (9), which is in operative connection with the first piston (2), and thus holds that component (9) against a stop (24) of the second piston (53);
characterised by the following features:
e) a third piston (28, 29, 64) is provided, which has means (18) for moving the component (9) against the force of the compression spring (55) and thus acts by virtue of breaking the operative connection between the component (9), which is acted upon by the compression spring (55), and the first piston (2);
f) the third piston (28, 29, 64) has an effective face (23) which can be acted upon by the first brake pressure:
g) the effective face (23) is provided on that side of the third piston (28, 29, 64) which is remote from the second piston (53).

2. Dual-circuit brake valve device according to claim 1, characterised in that the component (9) is in the form of a tappet (9, 65).

3. Dual-circuit brake valve device according to claim 1, characterised in that the component (9) is in the form of a spring plate.

4. Dual-circuit brake valve device according to claim 1, characterised in that the first piston (2) has an extension that extends towards the second piston (53), which extension rests with its free end against the component (9).

5. Dual-circuit brake valve device according to claim 1, characterised by the following features:
a) the third piston (28, 29, 64) is constructed as a hollow piston;
b) the compression spring (55) is arranged in the third piston (28, 29, 64);
c) the third piston (28, 29, 64) is arranged in the second piston (53), displaceably in the direction of the longitudinal axis of the second piston (53), between two stops (48 and 24) arranged therein;
d) the third piston (28, 29, 64) has means (18) for drawing the component (9) with it against the force of the compression spring (55);
e) the distance between the first stop (48) and the second stop (24) of the second piston (53) is such that the third piston (28, 29, 64) can execute a stroke in the direction of the longitudinal axis of the second piston (53), which stroke is so proportioned that the operative connection between the first piston (2) and the second piston (53) is broken when the third piston (28, 29, 64) is resting against the first stop (48), and the operative connection between the first piston (2) and the second piston (53) is restored when the third piston (28, 29, 64) is resting against the second stop (24).

6. Dual-circuit brake valve device according to at least one of the preceding claims, characterised by the following features:
a) the third piston (28, 29, 64) consists of a tubular body (29, 64) on the outer circumferential surface of which is provided a circumferential projection (28);
b) that region (64) of the tubular body (29, 64) which faces the first combined inlet and outlet valve (14, 12, 11) extends into a tubular extension (22), extending towards the second piston (53), of the valve body (14) of the first combined inlet and outlet valve (14, 12, 11), and is sealed by means of a sealing ring (61) against the inner wall of the tubular extension (22);
c) that region (29) of the tubular body (29, 64) which faces the second piston (53), extends into the second piston (53) and is guided on the outer circumferential surface of a tubular projection (30) of the second piston (53);
d) arranged between the outer circumferential surface of the circumferential projection (28) of the third piston (28, 29, 64) and a wall that defines a through opening provided in the second piston (53) is a sealing element (26).

7. Dual-circuit brake valve device according to claim 1, characterised in that the second piston (53) bounds a control chamber (21) by a control face (57) that is acted upon by the first brake pressure, and a working chamber (44) by a reaction face (45) that is oppositely directed to that control face (57).

8. Dual-circuit brake valve device according to at least one of the preceding claims, characterised in that the second piston (53) is constructed as a stepped piston, the annular end face of the second piston, which end face faces the control chamber (21), being provided as a first effective face (57) and the step of the second piston (53) being provided as a second effective face (50).

9. Dual-circuit brake valve device according to at least one of the preceding claims, characterised by the following features:
a) the second piston (53) has a stepped through opening (31), the step being in the form of a first stop (48), and a safety ring, arranged opposite to the step, which is in the form of a second stop (24);
b) the third piston (28, 29, 64), together with its circumferential projection (28), is displaceably so arranged in the second piston (53) that its stroke is limited by the first stop (48) and the second stop (24).

10. Dual-circuit brake valve device according to at least one of the preceding claims, characterised in that the second piston (53) is in the form of a relay piston of which the side that faces the control chamber (21) can be acted upon by the first brake pressure and the side that is remote from the control chamber (21) is provided as a reaction face (45) for the second brake pressure.

11. Dual-circuit brake valve device according to at least one of the preceding claims, characterised in that the side of the circumferential projection (28) of the third piston (28, 29, 64), which side faces the control chamber (21), is in the form of an effective face (23) for the third piston (28, 29, 64), which effective face is acted upon by the pressure in the first control chamber.

12. Dual-circuit brake valve device according to at least one of the preceding claims, characterised in that the control chamber (21) and the pressure medium inlet chamber (34) are connected to one another by way of a channel.

13. Dual-circuit brake valve device according to at least one of the preceding claims, characterised in that a pressure medium connection (54), which is connected to a brake force regulator, is provided, by means of which a second effective face (50) of the second piston (53) can be acted upon by the pressure coming from the brake force regulator.

## Revendications

1. Dispositif de soupape de freinage à deux circuits pour une installation de freinage de véhicule à moteur pouvant être actionnée par l'air comprimé, possédant les particularités suivantes :
a) pour la commande de la pression dans le premier circuit de freinage, il est prévu un premier piston (2) actionné par une force de commande qui sert à actionner une première soupape combinée d'admission et d'échappement (14, 12, 11), cependant qu'une première pression de freinage dépendant du niveau de la force de commande est commandée par l'intermédiaire de la première soupape combinée d'admission et d'échappement (14, 12, 11), à partir d'une première réserve prévue pour le premier circuit de freinage ;
b) pour la commande de la pression dans le deuxième circuit de freinage, il est prévu un deuxième piston (53) auquel la première pression de freinage est transmise en tant que pression de commande, et qui sert à l'actionnement d'une deuxième soupape combinée d'admission et d'échappement (35, 33, 32), cependant qu'une deuxième pression de freinage, dépendant de la première pression de freinage, est commandée pour le deuxième circuit de freinage, par l'intermédiaire de la deuxième soupape combinée d'admission et d'échappement (35, 33, 32), en partant d'une deuxième réserve ou de la première réserve,
c) entre le premier piston (2) et le deuxième piston (53), est interposé un ressort de compression (55) par l'intermédiaire duquel le premier piston (2) et le deuxième piston (53) sont en liaison fonctionnelle ;
d) le ressort de compression (55) est maintenu captif sur le deuxième piston (53) par le fait qu'il prend appui sur le deuxième piston (53) par une de ses extrémités, tandis que, par son autre extrémité, il charge un organe (9) qui est en liaison fonctionnelle avec le premier piston (2) et, de cette façon, maintient l'organe (9) en appui contre une butée (24) du deuxième piston (53), caractérisé par les caractéristiques suivantes :
e) il est prévu un troisième piston (28, 29, 64) qui présente des moyens (18) servant à déplacer l'organe (9) à l'encontre de l'action du ressort de compression (55) et, par conséquent, dans le sens tendant à supprimer la liaison fonctionnelle entre l'organe (9) chargé par le ressort de compression (55) et le premier piston (2) ;
f) le troisième piston (28, 29, 64) présente une surface active (23) qui peut être chargée par la première pression de freinage ;
g) la surface active (23) est prévue sur la face du troisième piston (28, 29, 64) qui est éloignée du deuxième piston (53).

2. Dispositif de soupape de freinage à deux circuits selon la revendication 1, caractérisé en ce que l'organe (9) est constitué par un poussoir (9, 65).

3. Dispositif de soupape de freinage à deux circuits selon la revendication 1, caractérisé en ce que l'organe (9) est constitué par une coupelle de ressort.

4. Dispositif de soupape de freinage à deux circuits selon la revendication 1, caractérisé en ce que le premier piston (2) présente un prolongement s'étendant vers le deuxième piston (53) qui est en appui contre l'organe (9) par son extrémité libre.

5. Dispositif de soupape de freinage à deux circuits selon la revendication 1, caractérisé par les caractéristiques suivantes :
a) le troisième piston (28, 29, 64) est constitué par un piston creux ;
b) le ressort de compression (55) est disposé dans le troisième piston (28, 29, 64) ;
c) le troisième piston (28, 29, 64) est monté coulissant dans le deuxième piston (53) entre deux butées (48 et 24) disposées dans ce piston, pour coulisser parallèlement à l'axe longitudinal du deuxième piston (53) ;
d) le troisième piston (28, 29, 64) présente des moyens (18) servant à entraîner l'organe (9) à l'encontre de la
force du ressort de compression (55) ; e) la distance entre la première butée (48) et la deuxième butée (24) du deuxième piston (53) est calculée de manière que le troisième piston (28, 29, 64) puisse décrire, parallèlement à l'axe longitudinal du deuxième piston (53), une course qui est calculée de manière que la liaison fonctionnelle entre le premier piston (2) et le deuxième piston (53) soit supprimée lorsque le troisième piston (28, 29, 64) est en appui contre la première butée (48) et que la liaison fonctionnelle entre le premier piston (2) et le deuxième piston (53) soit rétablie lorsque le troisième piston (28, 29, 64) est en appui contre la deuxième butée (24).

6. Dispositif de soupape de freinage à deux circuits selon au moins une des revendications précédentes, caractérisé par les caractéristiques suivantes :
a) le troisième piston (28, 29, 64) est constitué par un corps tubulaire (29, 64) sur la surface latérale extérieure duquel est prévue une saillie périphérique (28) ;
b) la région (64) du corps tubulaire (29, 64) qui est dirigée vers la première soupape combinée d'admission et d'échappement (14, 12, 11) est engagée dans un prolongement tubulaire (22) de l'élément de soupape (14) de la première soupape combinée d'admission et d'échappement (14, 12, 11) qui s'étend vers le deuxième piston (53), et est montée à joint étanche contre la paroi intérieure du prolongement tubulaire (22) au moyen d'une bague d'étanchéité (61) ;
c) la région (29) du corps tubulaire (29, 64) qui est dirigée vers le deuxième piston (53) est engagée dans le deuxième piston (53) et est guidée sur la surface latérale extérieure d'une saillie tubulaire (30) du deuxième piston (53) ;
d) un élément d'étanchéité (26) est disposé entre la surface latérale extérieure de la saillie périphérique (28) du troisième piston (28, 29, 64) et une paroi qui limite une ouverture de passage prévue dans le deuxième piston (53).

7. Dispositif de soupape de freinage à deux circuits selon la revendication 1, caractérisé en ce que le deuxième piston (53) limite une chambre de commande (21) par une surface de commande (57) chargée par la première pression de freinage et une chambre de travail (44) par une surface de réaction (45) qui est dirigée à l'opposé de la surface de commande (57).

8. Dispositif de soupape de freinage à deux circuits selon au moins une des revendications précédentes, caractérisé en ce que le deuxième piston (53) est un piston étagé, la surface frontale annulaire du deuxième piston qui est dirigée vers la chambre de commande (21) constituant une première surface active (57) et le gradin du deuxième piston (53) constituant une deuxième surface active (50).

9. Dispositif de soupape de freinage à deux circuits selon au moins une des revendications précédentes, caractérisé par les caractéristiques suivantes :
a) le deuxième piston (53) présente une ouverture de passage étagée (31), le gradin constituant une première butée (48) et une bague d'arrêt disposée en face du gradin constituant une deuxième butée (24) ;
b) le troisième piston (28, 29, 64) est monté coulissant dans le deuxième piston (53) par sa saillie périphérique (28) de manière que sa course soit limitée par la première butée (48) et par la deuxième butée (24).

10. Dispositif de soupape de freinage à deux circuits selon au moins une des revendications précédentes, caractérisé en ce que le deuxième piston (53) constitue un piston relais dont la face dirigée vers la chambre de commande (21) peut être chargée par la première pression de freinage tandis que sa face qui est éloignée de la chambre de commande (21) constitue une surface de réaction (45) pour la deuxième pression de freinage.

11. Dispositif de soupape de freinage à deux circuits selon au moins une des revendications précédentes, caractérisé en ce que la face de la saillie circonférentielle (28) du troisième piston (28, 29, 64) qui est dirigée vers la chambre de commande (21) constitue une surface active pour le troisième piston (28, 29, 64), surface qui est chargée par la pression régnant dans la première chambre de commande.

12. Dispositif de soupape de freinage à deux circuits selon au moins une des revendications précédentes, caractérisé en ce que la chambre de commande (21) et la chambre d'entrée de fluide de pression (34) sont reliées l'une à l'autre par un canal.

13. Dispositif de soupape de freinage à deux circuits selon au moins une des revendications précédentes, caractérisé en ce qu'il est prévu un raccord de fluide de pression (54) relié à un régulateur de force de freinage, et par l'intermédiaire duquel une deuxième surface active (50) du deuxième piston (53) peut être chargée par la pression arrivant du régulateur de force de freinage.
